# EUROPEAN PATENT APPLICATION

(11) **EP 4 089 009 A1**
(43) Date of publication of application: **16.11.2022**
(21) Application number: 21382447.7
(22) Date of filing: 14.05.2021
(51) Int. Cl.: B64C 5/02

(54) **A METHOD FOR ASSEMBLING AN AIRCRAFT LIFTING SURFACE**

(71) Applicant: Airbus Operations, S.L.U., 28906 Getafe (ES)
(72) Inventor: FLORES HERNANDEZ, Carlos, 28905 Getafe (ES); GUINALDO FERNANDEZ, Enrique, 28906 Getafe (ES); RODRIGUEZ CARREÑO, Francisco Javier, 28906 Getafe (ES); CRISTINO PASAMONTES, Roberto, 28906 Getafe (ES); TORRES ESTEBAN, Antonio, 28906 Getafe (ES); RODRIGUEZ HERNANDEZ, Tomas, 28906 Getafe (ES); GARIA MARTIN, Diego, 28906 Getafe (ES)

(57) **Abstract**

The invention refers to a method for assembling an aircraft lifting surface that comprises providing two composite lateral boxes (1) and a composite central rib (7); laying up at least one sacrificial plie of composite on an extreme area (10) of the upper and lower skin covers of both lateral boxes (1); performing and recording measurements of the boxes and the central rib; determining the optimal assembly position for the two lateral boxes (1) and the central rib (7) using the measurements; calculating the thickness of composite to be milled on the extreme area (10) of the upper and lower skin covers of both lateral boxes (1) to avoid any potential clash between the central rib (7) and the lateral boxes (1); milling these thickness of composite; positioning the lateral boxes (1) and the central rib (7) at the optimal assembly position; and fastening all together.

## Description

### Object of the invention

The present invention refers to a method for assembling an aircraft lifting surface that comprises composite lateral boxes.

An object of the invention is to provide an assembling method able to take advantage of the manufacturing capabilities of the composite lateral boxes, specially of the highly integrated lateral boxes, to provide recurrent costs and lead-time reduction, together with an ergonomic improvement.

### Background of the invention

Some aircraft lifting surfaces, such as Horizontal Tail Planes (HTPs) are provided with lateral boxes, defined as multi-rib structures where two separated skins are assembled together by drilling and riveting the ribs to the skin. Both boxes are attached together through a rib1 structure. This rib1 is conventionally composed by Titanium T-shaped fittings and a CFRP shear web, together with an Aluminum Front Fitting and an Aluminum Rear Fitting.

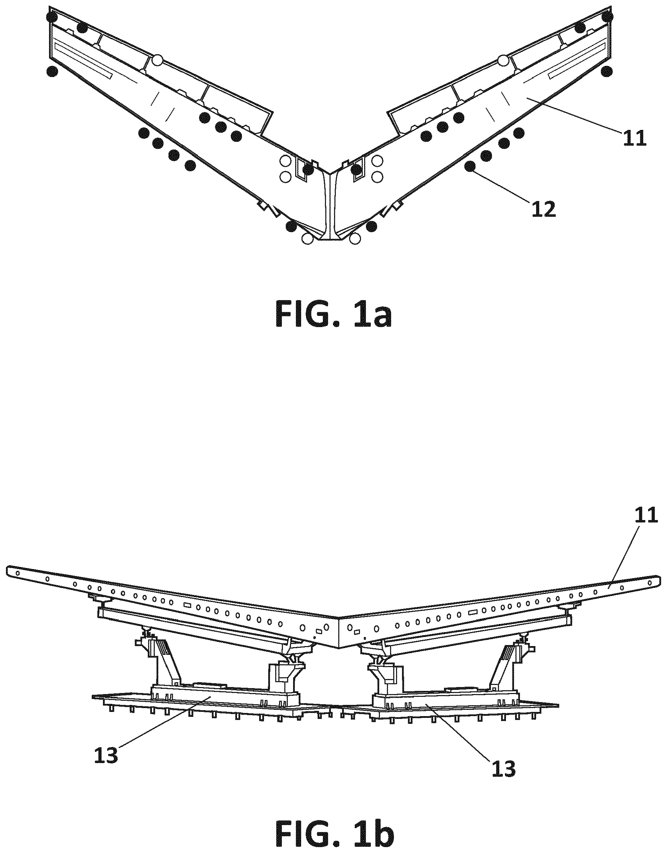

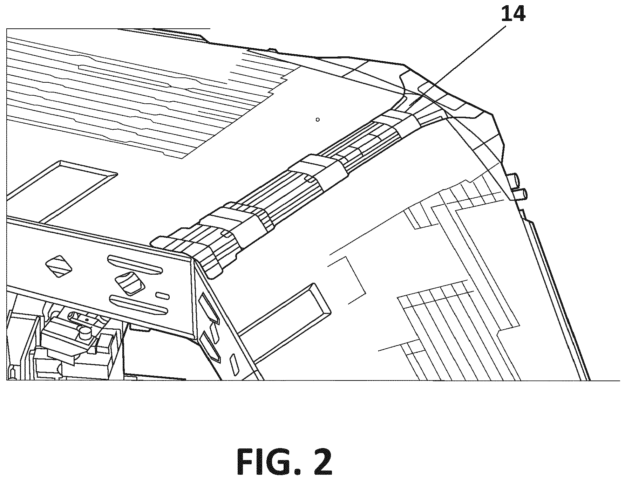

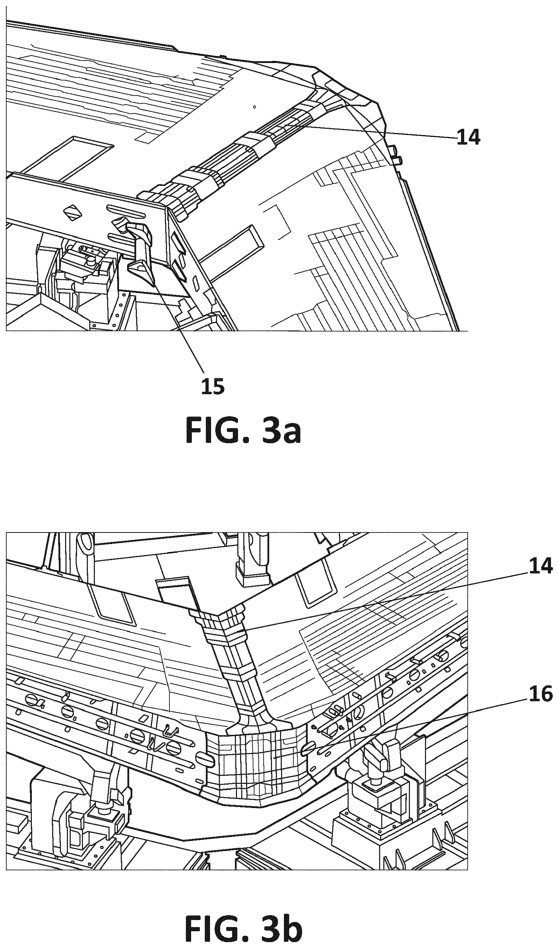

The conventional assembly process that joints all parts together to obtain these HTPs comprises the following steps:
1.- The boxes are put together in the right position using a laser tracker and a best fit positioning. Figure 1a shows the points (2) to be tracked by the laser. Figure 1b shows an example of equipment (3) used to precisely position the boxes (1) according to the laser measurements.
2.- Then, each part forming the rib1 structure is introduced in between the boxes. Figure 2 shows an intermediate state of the rib1 structure (4) mounting.
3.- Once the rib1 structure is in place, pre-holes are drilled to clamp and measure the gap between the Titanium T-shaped fittings and the skins. Depending on the gap measure, shim has to be applied. For that, part of rib1 structure has to be de-mounted to apply the shim, to be re-mounted again once the shim got dry.
4.- Further, rear and front fittings are installed. Figure 3a shows the Al Rear fitting (5) and the Al Front fitting (6).
5.- Latter on, rib1 structure is drilled to the skins.
6.- Finally, cleaning, deburring and riveting tasks have to be performed. After the drilling, parts have to be dismounted to let that the holes be cleaned and deburred. Latter on, parts are put in place again to be riveted.

It has to be noted, that in addition to the time consumption, the above-mentioned tasks count with highly restricted access (riveting shall be done inside the box), where ergonomics are highly penalized.

It would therefore be desirable to provide a new assembly method that simplifies the current method, while reducing its time and cost.

### Summary of the invention

The present invention overcomes the above mentioned drawbacks by providing a new method for assembling an aircraft lifting surface that uses the manufacturing capabilities offered by composite lateral boxes, and specially by one-shot composite lateral boxes.

The invention refers to an assembling method comprising the following steps:
a) providing two lateral boxes of composite material comprising:
   - a structure having a plurality of spars extended along a spanwise direction and/or a plurality of ribs extended along a chordwise direction, between upper and lower surfaces,
   - upper and lower skin covers of composite material respectively joined to the upper and lower surfaces of the structure,
b) providing a monolithic (one-piece) central rib made of composite, having a shear web between upper and lower flanges,
c) laying up at least one sacrificial (additional) plie of composite on an extreme area of the upper and lower skin covers of both lateral boxes, the extreme area at least comprising the area of the upper and lower skin covers intented to be joined to the central rib,
d) performing a set of measurements at predetermined locations in each lateral box,
e) recording these lateral boxes measurements,
f) performing a set of measurements at predetermined locations in the central rib,
g) recording these central rib measurements,
h) determining the optimal assembly position for the two lateral boxes and the central rib using the lateral boxes measurements and the central rib measurements,
i) calculating the potential clash between the upper and lower flanges of the central rib and the extreme area of the upper and lower skin covers of the lateral boxes,
j) calculating the thickness of composite to be milled on the extreme area of the upper and lower skin covers of both lateral boxes to avoid the previously calculated potential clash,
k) milling at least the previously calculated thickness of composite on the extreme area of the upper and lower skin covers of both lateral boxes,
l) positioning the lateral boxes and the central rib at the determined optimal assembly position,
m) fastening each lateral box with the central rib to finally assemble the aircraft lifting surface.

The invention provides a quicker and simpler process of assembly in comparison with the state of the art process, by taking advantage of the capabilities that integrated pieces, such as the monolithic central rib and preferably one-shot lateral boxes, may bring to a new process. In this context, the process of assembly absorbs the variabilities inherited from the previous manufacture/assemble process of these pieces, creating virtual images of all of them by measuring and recording these pieces in predetermined locations. This way, the invention seeks for the optimal position for the lateral boxes and the central rib all together.

Further, the invention avoids the use of shim between the central rib and the upper and lower skin covers of the lateral boxes. This avoids several mounting-dismounting tasks and the need to wait to get dry, thus reducing the lead time and recurrent costs. In addition, the invention solves ergonomic issues since no access has to be done to get inside the boxes.

Finally, the use of a central rib made of composite contributes to offer a quicker and simpler process of assembly since no more cleaning (together with mounting-dismounting associated tasks) will be needed as one-way assembly is qualified for CFRP-CFRP.

### Brief description of the drawings

For a better comprehension of the invention, the following drawings are provided for illustrative and non-limiting purposes, wherein:
Figure 1a shows a schematic plan view of an HTP equipped with two conventional multispar lateral boxes and points to be tracked in their assembly process. Figure 1b shows a front view of a state of the art machine used in the conventional assembly process.
Figure 2 shows a schematic perspective view of an intermediate state of the mounting of the state of the art rib1 structure.
Figure 3a shows a schematic perspective view of the state of the art rear fitting installation. Figure 3b shows a schematic perspective view of the state of the art front fitting installation.
Figure 4a shows a plan view of the positioning of the central rib between the two multispar lateral boxes before determining the optimal assembly position. Figure 4b shows schematic lateral views of the central rib and the multispar lateral boxes. Figure 4c shows a perspective view of an extreme area of the upper and lower skin covers of a multispar lateral box.

### Preferred embodiments of the invention

According to a preferred embodiment of the invention, the method for assembling an aircraft lifting surface comprises providing a pair of multispar lateral boxes (1), and a monolithic central rib (7) made as a single unit. Both structures (1, 7) are highly integrated structures that offer a quicker and more global process of assembly as all structures involved are individually measured to be taken into account together at the same time. Besides, these structures (1, 7) are made of composite to offer a one-way assembly, eliminating the cleaning and the mounting-dismounting associated tasks.

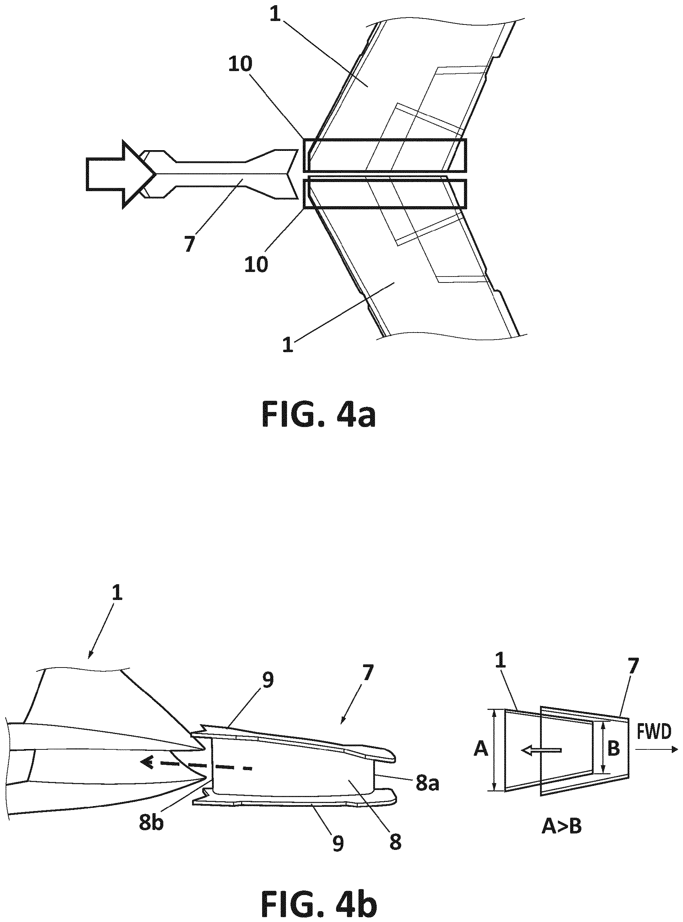

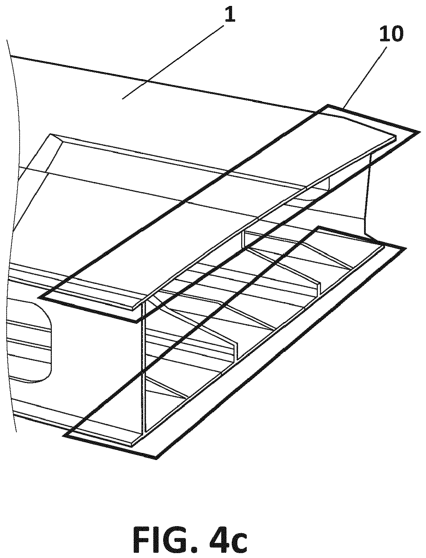

Regarding the lateral boxes (1), the method of the invention includes the laying up of at least one sacrificial plie of composite on an extreme area (10) of the upper and lower skin covers of both lateral boxes (1). This extreme area (10) at least comprises the area of the upper and lower skin covers intended to be joined to the central rib (7). Figures 4a and 4c show a view of these extreme areas (10).

According to a preferred embodiment, the central rib (7) consists of a one-shot manufactured piece.

Alternatively, according to another preferred embodiment, the central rib (7) consists of a pre-assembled piece comprising two triform fittings forming the upper and lower flanges (9), riveted to the shear web (8).

According to another preferred embodiment, the lateral boxes (1) have a tronco-conical shape and the central rib shear web (8) has lateral sides (8a, 8b) with different lengths, these lateral sides (8a, 8b) extending between the central rib upper and lower flanges (9).The shorter side (8a) is intended to be joined to the front part (leading edge side) of the lateral boxes (1), and the larger side (8b) the rear part (rear edge side) of the boxes (1). This configuration avoids riveting tasks in the inner part of the lateral boxes.

According to another preferred embodiment, the optimal assembly position is determined as the position of the two lateral boxes (1) and the central rib (7) that offers a total minimum difference between the measurements of each lateral box (1) and the central rib (7), therefore minimizing the amount of sacrificial composite plies to be machined (removed).

After that, the potential clash between the upper and lower flanges of the central rib (9) and the extreme area (10) of the upper and lower skin covers of the lateral boxes (1) is calculated.

Then, a certain thickness of composite have to be milled (removed) on the extreme area (10) of the upper and lower skin covers of both lateral boxes (1) to avoid the previously calculated potential clash.

Later on, the lateral boxes (1) and the central rib (7) are positioning at the determined optimal assembly position. Figures 4a and 4b show a view of these lateral boxes (1) and central rib (7) positioning.

According to another preferred embodiment, the method further comprises trimming all the edges of the lateral boxes (1).

According to another preferred embodiment, the method further comprises drilling reference holes to be used in its last step.

According to another preferred embodiment, the method further comprises machining holes in the spars to introduce systems.

Finally, the method comprises fastening each lateral box (1) with the central rib (7) to finally assemble the aircraft lifting surface.

According to a preferred embodiment, the fastening comprises the use of blind fasteners for fastening the lateral boxes (1) with the central rib (7).

## Claims

1. A method for assembling an aircraft lifting surface, the method comprising:
a) providing two lateral boxes (1) of composite material comprising:
- a structure having a plurality of spars extended along a spanwise direction and/or a plurality of ribs extended along a chordwise direction, between upper and lower surfaces,
- upper and lower skin covers of composite material respectively joined to the upper and lower surfaces of the structure,
b) providing a monolithic central rib (7) made of composite, having a shear web (8) between upper and lower flanges (9),
c) laying up at least one sacrificial plie of composite on an extreme area (10) of the upper and lower skin covers of both lateral boxes (1), the extreme area (10) at least comprising the area of the upper and lower skin covers intended to be joined to the central rib (7),
d) performing a set of measurements at predetermined locations in each lateral box (1),
e) recording these lateral boxes measurements,
f) performing a set of measurements at predetermined locations in the central rib (7),
g) recording these central rib measurements,
h) determining the optimal assembly position for the two lateral boxes (1) and the central rib (7) using the lateral boxes measurements and the central rib measurements,
i) calculating the potential clash between the upper and lower flanges of the central rib (9) and the extreme area (10) of the upper and lower skin covers of the lateral boxes (1),
j) calculating the thickness of composite to be milled on the extreme area (10) of the upper and lower skin covers of both lateral boxes (1) to avoid the previously calculated potential clash,
k) milling the previously calculated thickness of composite on the extreme area (10) of the upper and lower skin covers of both lateral boxes (1),
l) positioning the lateral boxes (1) and the central rib (7) at the determined optimal assembly position,
m) fastening each lateral box (1) with the central rib (7) to finally assemble the aircraft lifting surface.

2. A method for manufacturing an aircraft lifting surface, according claim 1, wherein the central rib (7) consists of a one-shot manufactured piece.

3. A method for manufacturing an aircraft lifting surface, according to claim 1, wherein the central rib (7) consists of a pre-assembled piece comprising two triform fittings forming the upper and lower flanges (9) riveted to a web (8).

4. A method for manufacturing an aircraft lifting surface, according to any of the preceding claims, wherein the optimal assembly position is determined as the position of the two lateral boxes (1) and the central rib (7) that offers a total minimum difference between the measurements of each lateral box (1) and the central rib (7).

5. A method for manufacturing an aircraft lifting surface, according to any of the preceding claims, wherein after step I), the method further comprises trimming all the edges of the lateral boxes (1).

6. A method for manufacturing an aircraft lifting surface, according to any of the preceding claims, wherein after step I), the method further comprises drilling reference holes to be used in step I).

7. A method for manufacturing an aircraft lifting surface, according to any of the preceding claims, wherein after step I), the method further comprises machining holes in the spars to introduce systems.

8. A method for manufacturing an aircraft lifting surface, according to any of the preceding claims, wherein step m) comprises the use of blind fasteners for fastening the lateral boxes (1) with the central rib (7).
